# EUROPEAN PATENT SPECIFICATION

(11) **EP 1 875 982 B1**
(45) Date of publication and mention of the grant of the patent: **12.12.2018**
(21) Application number: 06745775.4
(22) Date of filing: 27.04.2006
(51) Int. Cl.: B23K 11/24, B23K 11/11

(54) **SPOT WELDING METHOD AND SPOT WELDING SYSTEM**
PUNKTSCHWEISSVERFAHREN UND PUNKTSCHWEISSSYSTEM
PROCEDE DE SOUDURE PAR POINTS ET SYSTEME DE SOUDURE PAR POINTS

(30) Priority: 28.04.2005 JP 2005131164
(43) Date of publication of application: 09.01.2008
(73) Proprietor: Nachi-Fujikoshi Corp., Tokyo (JP)
(72) Inventor: MARUYAMA, Akira c/o Nachi-Fujikoshi Corp., Toyama-shi, Toyama 930-8511 (JP)
(74) Representative: Henkel, Breuer & Partner
(86) International application number: PCT/JP2006/308847
(87) International publication number: WO 2006/118197

(56) References cited:
- DE-A1- 10 224 402
- JP-A- 07 116 856
- JP-A- 10 006 026
- JP-A- 10 094 882
- JP-A- 2002 035 953
- JP-A- 2002 035 953
- JP-A- 2003 305 573
- US-A- 5 883 355
- US-A1- 2001 045 413

## Description

### TECHNICAL FIELD

The present invention relates to spot welding, and more particularly to a spot welding system in which pressing force of welding electrodes driven by a servomotor is accurately controlled.

### BACKGROUND ART

Spot welding is a technique of welding articles to be welded (hereinafter referred to as a work) by clamping and pressing it with a pair of welding electrodes and by applying large current to melt the work. Particularly, there have been widely used electric welding guns in which welding electrodes are driven by a servomotor, because of their advantages that the pressing force can be freely set and also the opening/closing operation can be freely controlled.

Typically, such an electric welding gun is combined with an articulated robot to automate welding operation and is widely used in jointing of automobile bodies and the like.

In the spot welding, in order to maintain a welding quality, work clamping-pressing force must be maintained at a predetermined value.

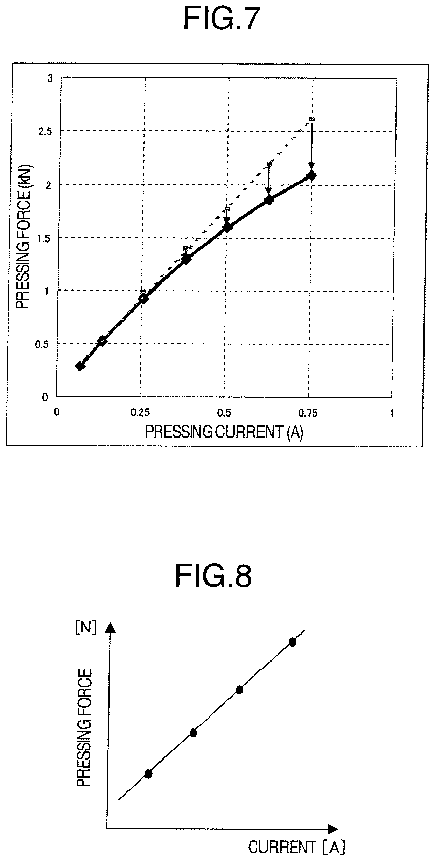

For this purpose, in the conventional art, the current value of a servomotor for driving welding electrodes is used as alternative characteristic to regulate the clamping-pressing force. More specifically, a relationship between the servomotor driving current and the electrode pressing force is measured beforehand, and a correlation function, for example, as illustrated in Fig. 8 is preliminarily prepared. Then, a current value corresponding to a desired pressing force is determined from this function, and that current is supplied to the servomotor.

However, even when the servomotor is driven based on the above correlation function, the pressing force actually produced may not reach the specified value.

For example, this is the case with an electric welding gun installed in an articulated robot. In this case, the welding electrodes can take various directions relative to a direction of gravitational force, but generally, with the same driving current, when pressing force is applied in a direction opposite the direction of gravitational force, the produced pressing force is smaller than when pressing force is applied in the direction of gravitational force. Also, the electrodes melt and deform during welding, and a secular change of electrical and mechanical loss of the servomotor and electric welding gun also affects the clamping-pressing force. Further, heat produced during welding operation and an environmental variation such as a temperature variation also vary the pressing force.

Some proposals have been made to solve the above problems.
As an example, there is proposed a method of preliminarily determining a correlation function between driving current and pressing force for every pressing direction and calculating a driving current according to a pressing direction (for example, see JP 2004-195545 A). Also, there is known a method of making welding electrodes catch a pressing force sensor at every given time period to re-determine a correlation function (for example, see JP 2003-326370 A). Further, there is proposed a method of, while measuring force applied to a work, moving the position of an electrode driving servomotor so as to provide a specified pressing force (for example, see EP 0278185 B1).

In order to improve spot welding efficiency, it is desirable to more accurately control the pressing force applied to a work in all situations than in the conventional art.

For example, in the above described method of updating the correlation function at every given time period, it is not known whether or not the specified pressing force is attained at the actual welding position, and the clamping-pressing force cannot be accurately controlled. Also, in the method of regulating the pressing force based on the position of the driving servomotor, the generation state of the pressing force varies significantly depending on the material of a work clamped and on the state of the electric welding gun and welding electrodes, and it is extremely difficult to stabilize the pressing force.

JP 2002-035953 A discloses a spot welding system and control method in which a pressing force applied to a work piece is detected during the welding process by pressure sensors. The detected pressure signals from the pressure sensors are compared with a desired pressing force and the difference is calculated as a correction quantity for the pressing force. The servo motor for displacing one of the electrodes is controlled based on the correction quantity.

US 5883355 A discloses a method of adjusting a clamping force of a servo-controlled welding gun. The control method is based on the application of a clamping force/electric current-table from which a supply current to the servo motor is determined on the basis of a measured clamping force.

DE 10224402 A1, JP 10-094882 A and US 2001/045413 A respectively disclose methods of adjusting the clamping force of a servo-controlled welding gun based on a measurement of the pressing force.

### DISCLOSURE OF THE INVENTION

The present invention has an object of providing a spot welding system for accurately controlling pressing force of welding electrodes driven by a servomotor.
Another aspect of the invention is to provide a spot welding system for surely carrying out the above method with simple and low-cost construction.

For this purpose, the invention provides a spot welding system as defined in the attached claim.

The spot welding system according to the invention includes welding electrodes arranged opposite each other, a servomotor for driving the welding electrodes, and a control unit for controlling operation of the servomotor. Further, a pressing force detector is provided to measure the pressing force actually applied to a work. The control unit has a pressing force control circuit that receives a measured value of the detector and regulates a driving current to the servomotor to control the pressing force applied to the work.

The pressing force control circuit compares the measured value of the pressing force detector with a desired pressing force to the work and calculates, according to a difference therebetween, a driving current to be sent to the servomotor.

With the above configuration of the invention, the pressing force actually applied to the work is monitored in real-time, this is fed back to directly regulate the servomotor driving current, and therefore the desired pressing force is accurately obtained. Accordingly, excellent welding quality can be ensured, thereby attaining improvement of operating efficiency.

### BEST MODE FOR CARRYING OUT THE INVENTION

The invention will now be described with reference to embodiments illustrated in the drawings.

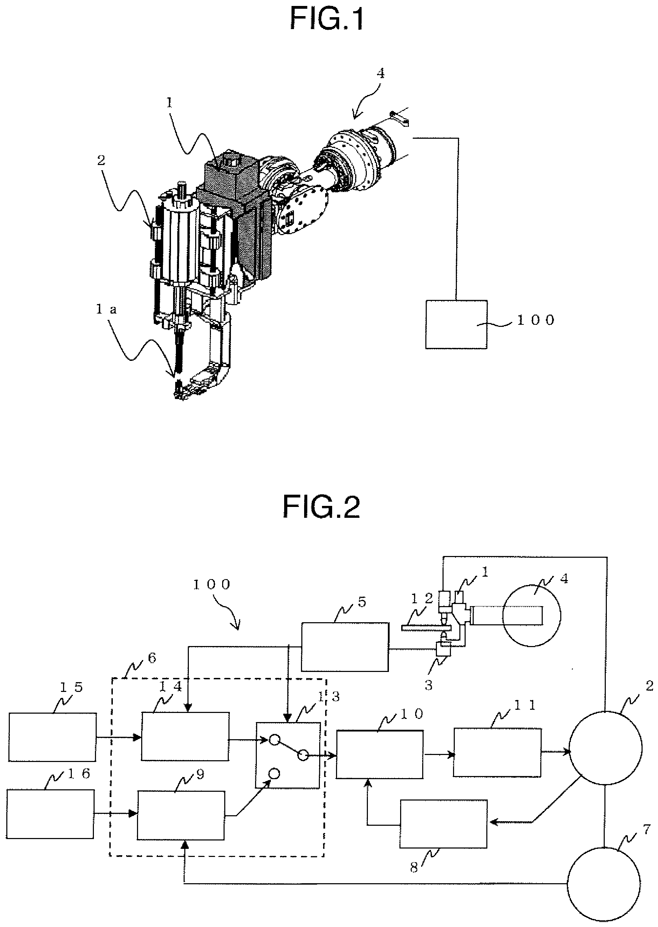

Referring to Fig. 1, a spot welding system according to the invention has an electric welding gun 1. The electric welding gun 1 is mounted on a tip end of an articulated robot 4 to be freely changeable of its position and direction. A servomotor 2 is mounted in the welding gun 1 for driving a pair of welding electrodes 1a disposed opposite each other to make them approach each other or detach from each other. Further, a control device 100 is connected to the system for controlling the operation of the welding gun 1 and articulated robot 4.

The spot welding system of the invention has a construction similar to that of conventional systems, except for parts related to work pressing control, and therefore, in the present specification, the electric welding gun 1, articulated robot 4 and parts associated with them will be described no more.

Fig. 2 illustrates related parts for controlling work pressing force.

In Fig. 2, the electric welding gun 1 and the articulated robot 4 of Fig. 1 are also illustrated in simplified shapes, and a pressing force detector 3 is attached to the electric welding gun 1. The pressing force detector 3 is a pressure sensor capable of measuring pressing force applied to a work 12 during clamping-pressing operation of the welding electrodes. An output of the pressing force detector 3 is taken into a control calculation CPU 6 in the control device through a pressing force interface circuit 5.

Position information from an encoder 7 of the servomotor 2 and current information from a detector 8 for detecting driving current of the servomotor 2 are also inputted to the control device 100. In the control calculation CPU 6 of the control device, a position control circuit 9 usually generates a current command and makes a driving current flow through a current control circuit 10 and a current amplifier 11 into the servomotor 2, so that the position of the servomotor 2 follows a command position 16, thus constituting a feedback loop for position control. This position control causes the electrodes of the electric welding gun 1 to move to a position for clamping the work 12 and to clamp the work 12 and produce pressing force.

In this operation, when a detection output of the pressing force detector 3 exceeds a specified pressing force, the control calculation CPU 6 switches connection, as indicated by reference numeral 13 in Fig. 2, from the position control circuit 9 to a pressing force control circuit 14. Subsequently, the pressing force control circuit 14 calculates, based on an output from the pressing force detector 3 and a pressing force command 15, a command current so that the clamping-pressing force reaches the command pressing force, and then this current is made to flow from the current control circuit 10 to the servomotor 2 to thereby attain the command pressing force.

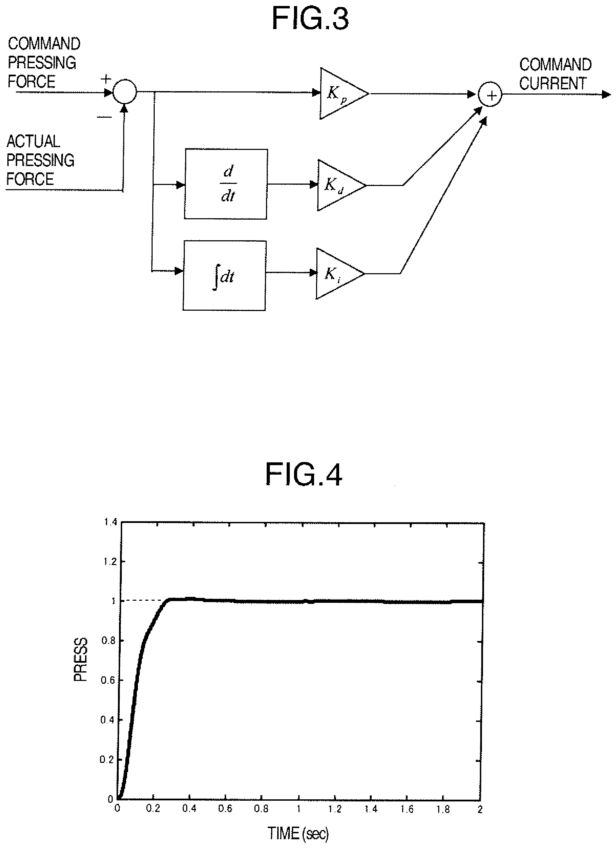

The pressing force control circuit 14 is, as illustrated in Fig. 3, comprised of a PID compensator for the difference between command pressing force and clamping-pressing force.

In this way, in the above described spot welding system, the pressing force actually applied to the work 12 is detected, the detection value is compared with the command value, and if necessary, the driving current to the servomotor 2 is regulated. As a result of such control, the clamping-pressing force actually applied to the work 12 agrees with the command pressing force, and, as shown in Fig. 4, the desired clamping-pressing force can be attained with no steady deviation and with excellent response characteristics.
A spot welding system according to another example serving to explain aspects of the invention will now be described. The system of the example adopts feedforward control in addition to the feedback control of the embodiment of Fig. 2. In this system, the pressing force control circuit of the control device is different from that of the embodiment of Fig. 2, but the other construction is identical with that of the former embodiment and only different parts will be described.

More specifically, the embodiment of Fig. 2 makes feedback of pressing force information in real time, and pressing current control is performed by a method in which a pressing force current is determined and the servomotor is driven by proportional control of calculating a difference between an actual pressing force and a command pressing force and reducing the difference, by integral control of reducing the steady deviation to zero and by differential control of increasing the speed of reducing the deviation, as illustrated in Fig. 3. This is a feedback technique.

With this technique, pressing force actually applied to a work can be made to agree with command pressing force, influence of disturbances such as a characteristic variation of a work to be welded can be inhibited, and influence of a system characteristic variation such as aging can be reduced.

Further, in the spot welding system of the example, a two-degree-of-freedom control structure is applied to the real-time feedback control of pressing force in order to improve the transient response of pressing force deviation by the feedback control, which control structure may have a feedforward function by adding a nominal pressing current determined from a command pressing force to a feedback amount of pressing force deviation.

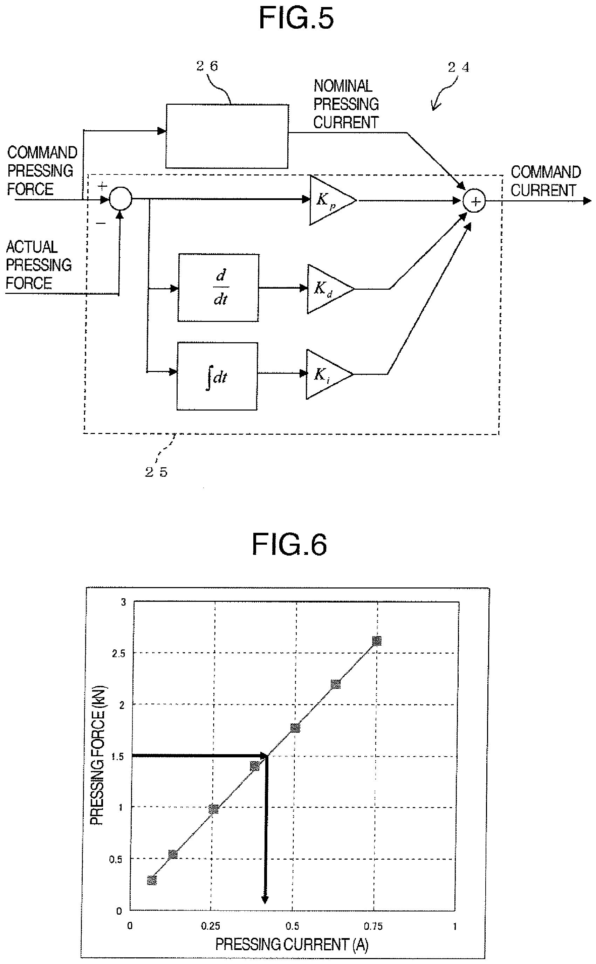

For this end, the pressing force control circuit 24 of this system has, as shown in Fig. 5, a nominal pressing current calculation circuit 26 in addition to a PID control circuit 25 of the same construction as the pressing force control circuit 14 of Fig. 2.

The nominal pressing current calculation circuit 26 calculates, based on a pressing force command (see reference numeral 15 of Fig. 2), a pressing current corresponding to the command pressing force.

The nominal pressing current calculation at this time is performed by a method in which servomotor driving currents corresponding to various magnitudes of pressing force are measured beforehand, a pressing current-to-pressing force table as illustrated in the graph of Fig. 6 is prepared and stored, and a pressing current value corresponding to a pressing force command is read from this table. The pressing force control circuit 24 adds the calculated nominal pressing current to the current command produced by the PID control circuit 25, and sends the resultant current to the servomotor of the electric welding gun. Then, a pressing force actually applied to the work is measured by a pressing force detector (see reference numeral 3 of Fig. 2), the measured value is fed back to the pressing force control circuit 24, and a difference from the command pressing force is calculated by the PID control circuit 25.

In this way, the spot welding system of the second embodiment, in a normal state, selects a predetermined nominal pressing current corresponding to a specified pressing force and generates a pressing force of the command value with excellent response characteristics.

On the other hand, when some factor such as welding environment variations or aging of welding equipment causes an actually generated pressing force to deviate from the value of the pressing current-to-pressing force characteristic graph of Fig. 6, the system automatically regulates the pressing current feedback so that the PID control circuit 25 generates the command pressing force.

When the command pressing force is obtained by this re-regulation, a pressing current value at this time is monitored, and the pressing current-to-pressing force characteristic graph for nominal current calculation is modified as illustrated in Fig. 7. With this modification, from next time onward, pressing force of the command value can be generated solely by supplying the nominal pressing current, and required pressing force can be attained in excellent response solely by the feedforward control without using the feedback control.

In this case, the preliminarily set pressing current-to-pressing force characteristics vary due to aging of welding equipment or welding environment variations, but by successively updating the pressing current-to-pressing force table with use of a command current value sent to the servomotor when a command pressing force is attained, proper feedforward control can be performed at all times, also the control device can have a sort of learning function, and thus excellent transient response can be expected.

While the present invention has been described with respect to the illustrated embodiment and example, the present invention is not limited solely to those specific forms, and many modifications may be made to the forms described above within the scope of the appended claim.

### BRIEF DESCRIPTION OF THE DRAWINGS

Fig. 1 is a perspective view of an electric welding gun of a spot welding system according to an embodiment of the present invention.
Fig. 2 is a block diagram showing a configuration related to work pressing force control in the system of Fig. 1.
Fig. 3 is a block diagram showing a configuration of the pressing force control circuit of Fig. 2.
Fig. 4 is a graph showing response characteristics of the pressing control by the system of Fig. 1.
Fig. 5 is a block diagram showing a pressing force control circuit of a spot welding system according to another example serving to explain certain aspects of the invention.
Fig. 6 is a graph exemplarily illustrating pressing current-to-pressing force characteristics used in the pressing force control circuit of Fig. 5.
Fig. 7 is a graph showing modification of the graph of Fig. 6 based on pressing force control results.
Fig. 8 is a graph of correlation function between pressing force and servomotor driving current used for pressing force control in a conventional spot welding system.

## Claims

1. A spot welding system including:
a pair of welding electrodes arranged opposite each other;
a servomotor (2) for driving the welding electrodes so as to clamp and press a work (12);
a control device (100) for controlling operation of the servomotor (2); and
a pressing force detector (3) provided to measure a pressing force actually applied to the work (12),
wherein said control device (100) has a pressing force control circuit (14) for regulating a driving current to be sent to the servomotor (2) based on a measured value of the pressing force detector (3) to control the pressing force applied to the work (12);
**characterized in that**
said pressing force control circuit (14) is adapted to perform a pressing current control as a real-time feedback control, wherein a pressing force current to be sent to the servomotor (2) as the driving current is determined and the servomotor (2) is driven by a proportional control of calculating a difference between the actual pressing force applied to the work (12) and a command pressing force and reducing the difference, by an integral control of reducing the steady deviation to zero, and by a differential control of increasing the speed of reducing the deviation.

## Patentansprüche

1. Ein Punktschweißsystem mit:
einem Paar von Schweißelektroden, die einer gegenüber angeordnet sind,
einem Servomotor (2) zum Antreiben der Schweißelektroden, damit diese ein Werkstück (12) klemmen und drücken,
einer Steuervorrichtung (100) zum Steuern des Betriebs des Servomotors (2), und
einem Druckkraftdetektor (3), der zum Messen einer tatsächlich auf das Werkstück (12) ausgeübten Druckkraft vorgesehen ist,
wobei die Steuervorrichtung (100) einen Druckkraftsteuerkreis (14) zum Regulieren eines Antriebsstroms, der an den Servomotor (2) zu schicken ist, basierend auf einem gemessenen Wert des Druckkraftdetektors (3), zum Steuern der Druckkraft, die auf das Werkstück (12) ausgeübt wird, aufweist,
**dadurch gekennzeichnet, dass**
der Druckkraftsteuerkreis (14) eingerichtet ist, um eine Druckstromsteuerung als eine Echtzeit-Rückkopplungssteuerung bzw. -regelung auszuführen, wobei ein Druckkraftstrom, der an den Servomotor (2) als Antriebsstrom zu schicken ist, bestimmt und der Servomotor (2) durch eine Proportionalsteuerung des Berechnens einer Differenz zwischen der tatsächlichen auf das Werkstück (12) ausgeübten Druckkraft und einer Befehlsdruckkraft und durch Verringern der Differenz, durch eine Integralsteuerung des Reduzierens der gleitenden Abweichung auf null, und durch eine Differentialsteuerung des Erhöhens der Geschwindigkeit des Verringerns der Abweichung aufgetrieben wird.

## Revendications

1. Système de soudage par points qui comprend :
une paire d'électrodes de soudage disposées de manière opposée l'une à l'autre ;
un servomoteur (2) destiné à exciter les électrodes de soudage de façon à serrer et à presser une pièce (12) ;
un dispositif de commande (100) destiné à contrôler le fonctionnement du servomoteur (2) ; et
un détecteur de force de pression (3) prévu pour mesurer une force de pression réellement exercée sur la pièce (12),
dans lequel ledit dispositif de commande (100) possède un circuit de commande de force de pression (14) destiné à réguler un courant d'excitation qui doit être envoyé vers le servomoteur (2) sur la base d'une valeur mesurée du détecteur de force de pression (3) de façon à contrôler la force de pression exercée sur la pièce (12) ;
**caractérisé en ce que**
ledit circuit de commande de force de pression (14) est adapté pour exécuter une commande de courant de pression comme une commande de réaction en temps réel, dans lequel un courant de force de pression qui doit être envoyé vers le servomoteur (2) en guise de courant d'excitation est déterminé, et le servomoteur (2) est excité par une commande proportionnelle qui consiste à calculer une différence entre la force de pression réelle exercée sur la pièce (12) et une force de pression de commande et à réduire la différence, à l'aide d'une commande intégrale de réduction de la déviation constante à zéro, et par une commande différentielle d'augmentation de la vitesse de réduction de la déviation.
